(19) **Europäisches Patentamt**

**European Patent Office**

**Office européen des brevets**

(11) **EP 1 389 885 A1**

(12) **EUROPEAN PATENT APPLICATION**

(43) Date of publication:
**18.02.2004 Bulletin 2004/08**

(51) Int Cl.⁷: **H04Q 7/38**

(21) Application number: **02018355.4**

(22) Date of filing: **14.08.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **SIEMENS AKTIENGESELLSCHAFT**<br>**80333 München (DE)** | (72) Inventors:<br> • **Döttling, Martin Walter, Dr.**<br>  **85579 Neubiberg (DE)**<br> • **Raaf, Bernhard**<br>  **81475 München (DE)** |

(54) **Method for transmitting control information in a shared control channel of a wireless communication system**

(57)     Method for transmitting control information concerning a data transmission channel between a network element and a mobile station in a high speed data access system (HSDPA).

- whereby a control channel is related to the data transmission channel,
- and encoded channel information is transmitted on said control channel,
- whereby said channel information is encoded by using an encoding rule comprising an amount of codewords, said encoding rule assigning a certain piece of channel information to a related codeword of the amount of codewords,

- whereby at least one codeword of the amount of codewords is not required for encoding the channel information and is used to encode control information by assigning a certain piece of control information to a related codeword of the amount of codewords,
- thus transmitting the encoded control information via the control channel.

The encoded control information can be a measurement characteristics message for changing the rate of measurements or for requesting an additional measurement and is sent in an HS-SCCH.

FIG 2

Tree offset indicator (4 bits)

Cluster code indicator (3 bits)

Decoding notation

$\boxed{m}$ — Number of multi-codes

$\boxed{\Delta}$ — Offset from left/right in code tree (SF = 16)

**Description**

**Field of the Invention**

The invention relates to a method for transmitting control information concerning a data transmission channel.

**Background of the Invention**

For transmitting information via a physical channel information about the condition of this channel has to be available. Therefor a number of different measurements are foreseen. For example, possible measurements for the mobile station or UE (User equipment) physical layer include the received signal code power (RSCP), the signal-to-interference ratio (SIR), the block error rate (BLER), the UE transmitted power, etc. Not all of these measurements are performed continuously, but different scheduling mechanism are applied.

These will be discussed on the basis of an example of HSDPA (High Speed Data Packet Access) data transmission within the UMTS (Universal Mobile Telecommunications System). The above mentioned measurements themselves are performed based on a pilot channel, requested on a control channel and reported on a further control channel; the further control channel is the HS-DPCCH (High Speed Dedicated Physical Control Channel) in the case of HSDPA.

The HSDPA data channel is basically an enhancement of the existing UMTS downlink shared channel. HSDPA allows to code multiplex different users or mobile stations on up to 15 codes with spreading factor of 16. The primary multiple access however is in the time domain, where different users can be scheduled every transmission time interval (TTI), which corresponds to 3 UMTS slots, i.e., 2 ms. Also the number of codes allocated to one user can change from TTI to TTI. Depending on the system load and channel conditions, the base station or Node B adapts modulation and code rate for each user. A certain combination of code rate and modulation is referred to as MCS (Modulation and Coding Scheme) level. The MCS level may change every TTI. It is determined by the base station based on feedback information or channel quality information (CQI) from the user terminal or mobile station, which stems from channel condition measurements. The channel quality information is sent with a periodicity ranging from one to 80 TTIs.

In other words, for HSDPA time transmission intervals or TTIs are assigned to the mobile stations within a cell by the Node B or base station. In a given time interval data are sent with a specified modulation and coding scheme or MCS. If more than one mobile station is present in the cell, the assignment of the TTIs is carried out on basis of the actual transmission conditions (channel condition). But even if there is only one mobile station in the cell the channel conditions have to be known in order to chose the suitable MCS. Therefor the mobile station sends the results of channel condition measurements, the so called channel quality information (CQI) to the base station.

The currently used UMTS (Universal System of Telecommunications) Standard for HSDPA proposes a slow signalling of a measurement control information concerning these channel condition measurements via higher layers of the OSI (Open System Interconnection)-model.

The control information describes e.g. the following parameters:

- The rate of the measurements (e.g. the repetition rate used for executing a measurement)
- The time offset in respect of a reference time
- The number of repetitions in a transmission of a measurement value.

Hence, after having established a radio link, that is a logical association between an single user equipment, e.g. a mobile station, and a Node B or a single UTRAN (Universal Terrestrial Radio Access Network) access point the measurements are performed at a fixed rate regardless if and when data is sent on the affiliated data channel.

Thus, possibly not necessary measurements or measurements at a wrong time are carried out.

To overcome this problem it was suggested to either extract additional information about the channel condition from the closed loop power control - what is not possible in cases where the concurrently existing dedicated channel of the UE is in soft handover- or to increase the rate of the measurements, as soon as it is recognized that data are being sent [1]. Thus, by choosing a lower "base rate" for the measurements the number of unnecessarily performed measurements can be decreased. However, there is still a delay time between the detection of activity at the mobile station, the execution of the measurement and the transmission of its results and the reception and evaluation at the receiver. Therefore, in consequence for each packet based data transmission the first few packets are transmitted without an actual channel condition measurement.

**Disclosure of the Invention**

Based on the foregoing description, it is an object of the present invention to create a method to enable a fast signalling of control information concerning a data transmission channel. It is a further object of the invention to do this without adding complexity to the signalling process.

The object of the invention will be achieved with a method which is characterised by what is disclosed in the appended independent claims. Advantageous embodiments of the present invention will be presented in the dependent claims.

The invention is based on the idea of transmitting the control information on a control channel, which is assigned to the respective data transmission channel via which the actual data are transmitted.

A part of the control channel contains modulation information and channel information, e.g. information on the spreading codes and the modulation used. This channel information is encoded by a encoding or source coding rule, which can be illustrated as an encoding matrix, by which a piece of information is assigned to a transmittable codeword. The control information is encoded using the same encoding rule, represented e.g. by an encoding matrix, but previously unused codewords. The respective codewords are sent via the control channel in the position or in place of the channel information.

In the case that the control information represents measurement control information the transmission via the control channel ensures, that already at the beginning of a data transmission a channel condition measurement can be performed and thus the transmission can be optimised right from the start. Moreover, by sending control information at the position of the channel information, it is ensured, that the detection performance of the control channel is retained by leaving the identification part of the control channel unchanged. In this context detection performance is meant for the easiness to detect a channel correctly.

### Brief description of the drawings

Fig. 1    A matrix used for encoding channel information for HSDPA according to prior art.

Fig. 2    A matrix used for encoding additional messages within the framework of signalling the channel information for HSDPA according to one embodiment of the invention.

Fig. 3    A cumulative Distribution of TTIs per packet call for 16- QAM and a multicode transmission with 10 spreading codes.

### Detailed description of the invention

In the following an embodiment of the invention for the aforementioned HSDPA data transfer in the framework of UMTS is described. However, the invention is neither restricted to UMTS nor to HSDPA, but can be applied for any data transfer channel and an assigned control channel within a communications network.

Furthermore, the examples focus on measurement control information, but the invention is applicable for all sort of control information concerning the data transfer channel. Even if a special matrix for encoding spreading information is used in the description, the general idea of encoding channel information and control information equally such that both can be transmitted on the same part of a control channel, can be applied for any encoding assignment and any two sorts of channel information and control information respectively.

So it is furthermore not a restriction of the meaning of control information if in the described embodiment the control information related to messages requesting new measurements or changing measurements conditions.

For HSDPA the measurement control information is transmitted via a control channel, e.g. the HS-SCCH (High Speed Shared Control Channel). The HS-SCCH is divided into two parts. In part 1 the information which is immediately required for the reception of the data on the HS-DSCH is accommodated. Thus, on part 1 of the HS-SCCH there is transmitted on the one hand channel information, e.g. information about the used spreading code, on the other hand identification information for which mobile station the information is intended. The identification information contains e.g. the mobile station identity number (UE ID: User Equipment Identity number). However, if no data is transmitted on the HS-DSCH (High Speed Downlink Shared Channel), no channel information is transmitted on the HS-SCCH. Instead of this, measurement control information is transmitted on HS-SCCH part 1.

So the reception includes two steps:

i) deciding whether information on the HS-SCCH is determined for the specific mobile station, e.g. by the UE ID of the mobile station;

ii) If the information is determined for the specific mobile station, then it has to be decided, whether this information contains channel information, e.g. about the used spreading codes or measurement control information.

The realisation of the second step is described as an example for the case that the channel information contains spreading information:

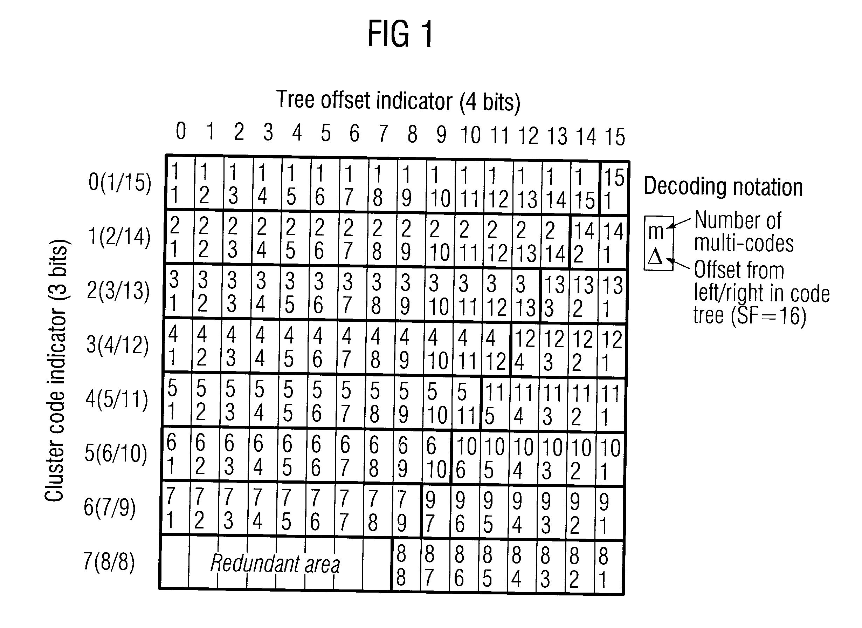

For encoding the information concerning the spreading codes a source coding or encoding rule is used, which in its currently used form is depicted in form of a matrix in Fig.1. It is obvious that more than one encoding rule can be used for coding the channel information. Each row indicates a certain value of a cluster code indicator, which is represented with a 3 bit word in the HS-SCCH. Each column indicates a value of a tree offset indicator, which is represented by a 4 bit word in the HS-SCCH. Both parameters will be explained below.

On the position of each entry two numbers are written, one above the other. The upper number represents the number of the multi-codes, that is the number of spreading codes used for transmission For the particular case of HSDPA, there exist 16 spreading codes, which are numbered from 0 to 15. The spreading code with number 0 is reserved for other services than HSDPA , the other 15 spreading codes can be used for HSDPA transmission.

More than one spreading code can be used for a mobile station. How many of the spreading codes are used is indicated with the upper number, denoted as m, see right area of Fig. 1. The lower number $\Delta$ indicates the number of the start code. In case several codes are allocated to one UE, m subsequent codes, starting at code $\Delta$ are used. Thus e.g. the entry "$4_7$" says that starting from spreading code 7 the following 4 spreading codes are used, i.e. 7 ,8 ,9 and 10. If this entry "$4_7$" is written in terms of " (cluster code indicator; tree offset indicator)" it refers to (3;6). The binary sequence of the latter values, the so called " codewords" are transmitted via the HS-SCCH part 1.

The parameter m is translated into or relates to the cluster code indicator, whose values are written on the left side outside the matrix. The cluster code indicator has values ranging from 0 to 7. The parameter $\Delta$ is related to the tree offset indicator, which has values ranging from 0 to 15. The exact relationship between these parameters is described by the following encoding formula given in [3,5], which is equivalent to the graphical representation used above based on the encoding matrix: Channelisation-code-set information via HS-SCCH is mapped in the following manner: The OVSF (Orthogonal variable spreading factor) codes shall be allocated in such a way that they are positioned in sequence in the code tree. That is, for M multicodes at offset P the following codes are allocated:

$$C_{ch,P,16} - C_{ch,P+M-1,16} \, ,$$

wherein the subscript ch denotes channelisation code, the index P the actual code number, and the last subscript the spreading factor of 16. The number of multicodes and the corresponding offset for a given HS-DSCH is signalled on the HS-SCCH, where the following algorithm is used for the encoding using 7 information bits: Three first bits (Code group indicator):

$$[x_{ccs,1}, x_{ccs,2}, x_{ccs,3}] \qquad = \min(M-1, 15-M)$$

Four last bits: (Code offset indicator):

$$[x_{ccs,4}, x_{ccs,5}, x_{ccs,6}, x_{ccs,7}] \qquad = |P-1-\llcorner M/8 \lrcorner *15|$$

where $\llcorner \lrcorner$ denotes rounding to nearest lower integer and min denotes the minimum out of the two numbers given in brackets.

In this formula M is equivalent to m and P to $\Delta$.

It can be seen from Fig. 1 that a few entries are empty, i.e. the respective codewords are not required to describe the spreading codes. For the invention this redundant codewords are used to describe measurement control information.

The second step of the reception process comprises then determining whether spreading information or measurement control information is being sent on the respective part of the HS-SCCH part 1.

For the above described embodiment this distinction is simple, because as soon as the codewords not used for the spreading information appear, it is clear that control information is being sent.

In one preferred embodiment of the present invention the control information in the first part of the HS-SCCH represents already all the measurement control information, whereas in another embodiment the control information in the first part of the HS-SCCH indicates only that further control information will be sent on other parts of the HS-SCCH . The latter embodiment will be discussed further in connection with measurement control messages.

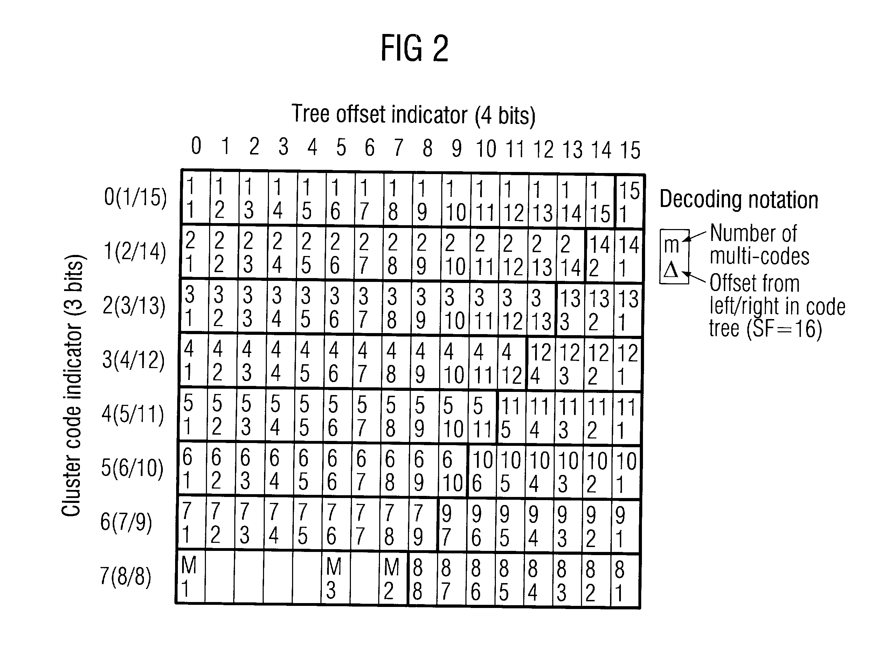

In Fig. 2 the matrix is depicted, where the formerly redundant area, that is the empty entries of the matrix are now assigned to measurement control information. The codewords related to the entries are therefore used to describe the measurement control information. In the described embodiment up to eight new messages can be produced with the old encoding scheme.

'In an embodiment the following messages are intended:

a) Message 1 (M1) - Request for a single channel condition measurement: This allows a single channel condition measurement in addition to periodically performed measurements. For examples this can be used by a transmitter, if the coherence time of a channel is presumably longer than the time required for the transmission of the data packets. In this context a coherence time is meant for the time a channel remains basically unchanged.

b) Message 2 (M2)- Request for an increase of the rate for the channel condition measurements: This allows to increase the measurement rate to the maximum value, which makes sense, e.g., in the case of a transmission time long compared to the coherence time. The maximum value of the measurement rate can depend on further parameters, like the number of repetitions of each measurement report, the power offset used for the CQI report, or UE capability parameters related to the reception of HSDPA, etc. For example, if the current parameter set uses a reporting cycle of $k$ time steps and N_cpi_transmit transmissions of each report, the maximum value of the measurement rate is setting the reporting cycle for new measurements $k$ equal to N_cqp_transmit. Thus every time step a CQI report will be sent (either a new report or a repetition of a previous one).

c) Message 3 (M3) - Request for new channel condition measurements every TTI. This message will set the reporting cycle and the number of transmissions of each report to 1. Additionally the transmission power used for reporting will be adjusted. This adjustment can take the change of the number of transmissions of each report into account. Thus every time step a new CQI report will be sent.

Five further messages can be accommodated and/or established according to the needs or the codewords can be left free. In table 1 the additional fast signalling messages M1, M2 and M3 are shown together with a possible representation in terms of tree offset indicator and cluster code indicator. It is obvious that the shown representation minimises the danger of confusing the codewords for M1 and M2 as the difference of the codewords for the tree offset indicator is maximum: 000 for M1 and 111 for M2. Since the messages M2 and M3 are more similar, M3 is encoded using 101 in the respective part of the codeword. Note, that also the additional bit (i.e. the modulation bit) in HS-SCCH, Part 1, may be used to further differentiate the code words and to accommodate further messages . For example this modulation bit may be set to 0 for M1 and M3, and to 1 for M2. The respective entries in the coding matrix are marked with M1, M2 and M3 in Fig. 2.

Table 1:

| Additional Fast Signalling Messages in HS-SCCH, Part1 | | | |
|---|---|---|---|
| | **Message** | **Remarks** | **Information Bits** |
| **M1** | CQI request | requests a single CQI report, allows to trigger CQI report prior to data transmission | 111 0-000 |
| **M 2** | CQI report every TTI ON | Allows Node B to bring UEs individually into the activity-based CQI reporting rate, end of high-rate reporting triggered by end of HS-DSCH activity and/or timer | 111 0-111 |
| **M 3** | New CQI report every TTI ON | Allows Node B to bring UEs individually into the activity-based CQI reporting rate, sets reporting cycle and transmission number to one and adjust reporting power offset accordingly, end of high-rate reporting triggered by end of HS-DSCH activity and/or timer | 111 0-101 |

Obviously the messages can be represented with other codewords, that is different entries in the matrix, too. It depends upon which messages are assigned to the individual entries and the possible consequences if messages are confused.

Hence, in one embodiment where all entries are assigned to messages, the assignment is done such, that the possible confusion of codewords does not lead to severe consequences, for example produce a reaction in the mobile station completely different from the wanted reaction.

In another embodiment referred to already above, only one message, e.g. M1, is used to indicate that results of channel condition measurements or CQI messages are being sent. Only in the second part or part 2 of the HS-SCCH the detailed measurement control information is being sent. Even if the second part of the HS-SCCH can be decoded later, as it is completely received only two time slots later, which corresponds to about 4/3 ms, this does not impose a problem: After having received the first part or part 1 of the HS-SCCH where it is indicated that measurement control information will be sent, the mobile station can already initiate an additional channel condition measurement. After having received the second part of the HS-SCCH the mobile station knows - still in time - whether this was the only additional message or whether other messages will follow.

In this embodiment the second part of the HS-SCCH has to be sent in contrast to other embodiments where the full message is already sent in the first part. The advantage is that only one of the 8 - for the encoding of the spreading information-remaining codewords - is allocated for measurement control information, whereas the others are left free for future extensions.

Generally the signalling of measurement control information concerning a data transfer channel via a control channel on the part normally reserved for channel information comprises the following advantages:

a) Channel condition measurements can be requested by measurement control messages such, that they coincide sufficiently with the beginning of a actual data packet transmission.
b) By knowing the channel conditions the throughput can be increased, because e.g. the appropriate MCS is used. Thus the duration of the occupation of channel resources is reduced.
c) Channel condition measurements can be requested specifically for a softhandover. During a softhandover a mobile station is connected to more than one base station. In this case the channel condition information stemming from the closed loop power control does not lead to satisfying results as the closed loop power control adjusts the power of all involved connection. For the HSDPA, however, only the connection to that specific base station or Node B or UTRAN access point is relevant, to which a HSDPA connection is established as HSDPA does not perform a soft-handover.
d) The base rate for channel condition measurements can be set to a lower value, because additional measurements can be requested at any time immediately. The lower measurement rate leads to a lower interference on one hand, on the other hand to a more reasonable use of the resources of the mobile station.
e) It offers a high flexibility as periods with a maximal rate of measurements can be adjusted specifically for the mobile station.
f) The change to the existing standard is minimal.
g) There is no negative influence to the detection probability of the control channel, e.g. the HS-SCCH and
h) also the detection complexity of the HS-SCCH is not increased, as the control information is not accommodated by connecting it with the identification information.
i) By the reservation of the range marked as redundant area future extensions can be accommodated without significant expenses or changes. An "old" mobile station, that means one not capable of decoding and extracting a meaning from the additional code words would simply ignore these messages and continue as if it would not have received anything.
j) Furthermore in the second part of the control channel, e.g. the HS-SCCH, further messages or parameters can be transmitted.

To recapitulate, the various embodiments of the invention offer a possibility for additional fast signalling messages using a part of a control channel, e.g. HS-SCCH part 1. Hereby, the performance and the detectability of the control channel is not altered or even declined as the control information is sent in place of the channel information and there is therefore no need to detect e.g. multiple UE ID fields, in which the control information is merged into.

Thus, the main benefits of the described invention include:

• An optimisation of scheduling efficiency also for the initial packets of a packet call, i.e. a transmission of at least one data package;

• A reduction of an uplink interference and a saving of UE resources due to fast adaptable channel condition measurements which leads to a relaxation of the CQI reporting cycle;

• would help the Node B to track the channel state in soft-handover;

• A higher flexibility than the currently used methods as it allows to bring the UEs in the activity-based CQI reporting mode individually, e.g. depending on the data queue in the Node B, etc.;

• A reduction of the requirements and rate of radio link setup and radio link reconfiguration messages.

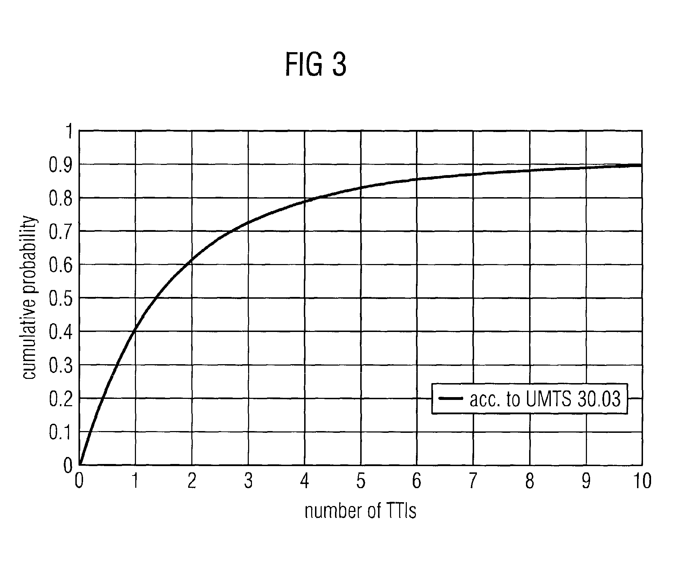

In Fig. 3 once again the need for an channel condition measurement right at the beginning of the data transmission is demonstrated: for the UMTS 30.03 specification the cumulative probability that a data transfer is ended after a number of time transmission intervals is depicted versus this number. It can be seen that in the case of the UMTS 30.03 regulation in 60 % of the data transmissions ('packet calls'), the transmission will be ended after two TTIs if 16-QAM and multicode transmission with 10 codes is used. This means, that the transmission will end before a new CQI information is available.

**Definitions**

In the framework of the application

- a mobile station denotes any terminal in a communications network.
- A network element can be e.g. a base station or a Node B in the terms of GSM (Global System of mobile communication) or UMTS (Universal Mobile Telecommunications System) respectively or any other central unit within a communications network dealing with the quality of transmission channels.
- A data transmission channel can be any channel for data transfer.
- A control channel may be any channel connected to a data transmission channel, via which control information concerning the data transfer channel is transferred.
- Channel information may describe which spreading codes are used, which modulation schemes, may contain timing information, and any other information related to the transport format, i.e. all information required to decode the associated data channel.
- An encoding rule realised by an matrix may be implemented as follows: An index of matrix entry " a" describes the position of that entry. For example the entry " $a_{ij}$" is situated in the $i^{th}$ line in the $j^{th}$ column. For coding, often the indices, that represent certain parameters, e.g. the tree offset indicator and the cluster code indicator, are used instead of the information in the respective entry. Thus a data compression can be achieved.
- A measurement of the channel condition includes sending data from a network element, e.g. a base station, to a mobile station. The mobile station provides then a feedback, on basis of which the base station determines e.g. how, in which form and when data are sent.
- Channelization is one part of the spreading process in UTRAN. The latter consists of two separate operations: i) Channelisation and ii) scrambling. Channelization transforms each data symbol into several chips. The ratio chips/symbol is called spreading factor. Control information comprises measurement control information, information on the control channels to be monitored, repetition factors and feedback cycles for reporting, power offset for reported values, and any other information influencing the format, content or timing of the feedback information.

**Abbreviations**

HSDPA High Speed Downlink Packet Access
HS-DSCH High Speed Downlink Shared Channel (Data)
HS-SCCH High Speed Shared Control Channel (Control Information, Signalling)
UE User Equipment (expression used for a terminal in the UMTS)
ID Identification Number

**References**

[1] 3GPP TSG RAN WG 1 Tdoc R1-01-1037, Lucent, "Variable rate channel quality indication in HSDPA," Jeju, Korea, November 2001,
[2] 3GPP TSG RAN WG 1 Tdoc R1-02-0908, Lucent, "Fast (MAC-hs) Signalling in HSDPA," Oulu, Finland, July 2002,
[3] 3GPP TS 25.212, Multiplexing and channel coding (FDD) (Release 5)
[4] 3GPP TSG RAN WG 1 Tdoc R1-02-0018, Nokia, "Compact signalling of multi-code allocation for HSDPA, version 2," Espoo, Finland, January 2002,
[5] 3GPP TS 25.213, Spreading and Modulation(FDD) (Release 5)

**Claims**

**1.** Method for transmitting control information concerning a data transmission channel between a network element and a mobile station

- whereby a control channel is related to the data transmission channel,
- and encoded channel information is transmitted on said control channel,
- whereby said channel information is encoded by using an encoding rule comprising an amount of codewords, said encoding rule assigning a certain piece of channel information to a related codeword of the amount of codewords,
- whereby at least one codeword of the amount of codewords is not required for encoding the channel information and is used to encode control information by assigning a certain piece of control information to a related codeword of the amount of codewords,
- thus transmitting the encoded control information via the control channel.

2. Method according to claim 1, wherein only a part of the channel information is encoded with said encoding rule.

3. Method according to claim 1 or 2, wherein the control information contains a measurement characteristics message concerning a channel condition measurement of the data transmission channel.

4. Method according to any of the preceding claims 2 to 3, wherein the control information is sent via a first part of the control channel, said control information indicating that further control information will be sent on a second part of the control channel.

5. Method according to any of the preceding claims 3 or 4, wherein by the measurement characteristic message an additional channel condition measurement is requested.

6. Method according to claim 3 or 4, wherein by the measurement characteristic message a change of the rate of the channel condition measurements is requested.

7. Method according to claim 4 or 5, wherein the characteristic message is sent from the network element to the mobile station or vice versa.

8. Method according to any of the preceding claims, wherein the encoding rule is represented by a matrix, whose row-index corresponds to a cluster code indicator and column-index corresponds to a treeoffset indicator.

9. Method according to any of the preceding claims wherein said network element and said mobile station are operated in the UMTS mode.

10. Method according to claim 9, wherein the data transmission channel is the HS-DSCH and the related control channel is the HS-SCCH.

11. Communications network comprising a mobile station and a network element, the communications network being generated to any of the preceding claims.

# FIG 1

Tree offset indicator (4 bits)

| Cluster code indicator (3 bits) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0(1/15) | 1/1 | 1/2 | 1/3 | 1/4 | 1/5 | 1/6 | 1/7 | 1/8 | 1/9 | 1/10 | 1/11 | 1/12 | 1/13 | 1/14 | 1/15 | 15/1 |
| 1(2/14) | 2/1 | 2/2 | 2/3 | 2/4 | 2/5 | 2/6 | 2/7 | 2/8 | 2/9 | 2/10 | 2/11 | 2/12 | 2/13 | 2/14 | 14/2 | 14/1 |
| 2(3/13) | 3/1 | 3/2 | 3/3 | 3/4 | 3/5 | 3/6 | 3/7 | 3/8 | 3/9 | 3/10 | 3/11 | 3/12 | 3/13 | 13/3 | 13/2 | 13/1 |
| 3(4/12) | 4/1 | 4/2 | 4/3 | 4/4 | 4/5 | 4/6 | 4/7 | 4/8 | 4/9 | 4/10 | 4/11 | 4/12 | 12/4 | 12/3 | 12/2 | 12/1 |
| 4(5/11) | 5/1 | 5/2 | 5/3 | 5/4 | 5/5 | 5/6 | 5/7 | 5/8 | 5/9 | 5/10 | 5/11 | 11/5 | 11/4 | 11/3 | 11/2 | 11/1 |
| 5(6/10) | 6/1 | 6/2 | 6/3 | 6/4 | 6/5 | 6/6 | 6/7 | 6/8 | 6/9 | 6/10 | 10/6 | 10/5 | 10/4 | 10/3 | 10/2 | 10/1 |
| 6(7/9) | 7/1 | 7/2 | 7/3 | 7/4 | 7/5 | 7/6 | 7/7 | 7/8 | 7/9 | 9/7 | 9/6 | 9/5 | 9/4 | 9/3 | 9/2 | 9/1 |
| 7(8/8) | Redundant area | | | | | | | | 8/8 | 8/7 | 8/6 | 8/5 | 8/4 | 8/3 | 8/2 | 8/1 |

Decoding notation

$m$ — Number of multi-codes

$\Delta$ — Offset from left/right in code tree (SF=16)

EP 1 389 885 A1

## FIG 2

Tree offset indicator (4 bits)

| Cluster code indicator (3 bits) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0(1/15) | 1/1 | 1/2 | 1/3 | 1/4 | 1/5 | 1/6 | 1/7 | 1/8 | 1/9 | 1/10 | 1/11 | 1/12 | 1/13 | 1/14 | 1/15 | 15/1 |
| 1(2/14) | 2/1 | 2/2 | 2/3 | 2/4 | 2/5 | 2/6 | 2/7 | 2/8 | 2/9 | 2/10 | 2/11 | 2/12 | 2/13 | 2/14 | 14/2 | 14/1 |
| 2(3/13) | 3/1 | 3/2 | 3/3 | 3/4 | 3/5 | 3/6 | 3/7 | 3/8 | 3/9 | 3/10 | 3/11 | 3/12 | 3/13 | 13/3 | 13/2 | 13/1 |
| 3(4/12) | 4/1 | 4/2 | 4/3 | 4/4 | 4/5 | 4/6 | 4/7 | 4/8 | 4/9 | 4/10 | 4/11 | 4/12 | 12/4 | 12/3 | 12/2 | 12/1 |
| 4(5/11) | 5/1 | 5/2 | 5/3 | 5/4 | 5/5 | 5/6 | 5/7 | 5/8 | 5/9 | 5/10 | 5/11 | 11/5 | 11/4 | 11/3 | 11/2 | 11/1 |
| 5(6/10) | 6/1 | 6/2 | 6/3 | 6/4 | 6/5 | 6/6 | 6/7 | 6/8 | 6/9 | 6/10 | 10/6 | 10/5 | 10/4 | 10/3 | 10/2 | 10/1 |
| 6(7/9) | 7/1 | 7/2 | 7/3 | 7/4 | 7/5 | 7/6 | 7/7 | 7/8 | 7/9 | 9/7 | 9/6 | 9/5 | 9/4 | 9/3 | 9/2 | 9/1 |
| 7(8/8) | M/1 | | | | M/3 | | M/2 | 8/8 | 8/7 | 8/6 | 8/5 | 8/4 | 8/3 | 8/2 | 8/1 | |

Decoding notation

$m$ — Number of multi-codes

$\Delta$ — Offset from left/right in code tree (SF=16)

EP 1 389 885 A1

# FIG 3

European Patent
Office

**EUROPEAN SEARCH REPORT**

Application Number

EP 02 01 8355

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | NOKIA: "Tdoc R1-02-0018: Compact signalling of multi-code allocation for HSDPA, version 2" TSG-RAN WORKING GROUP 1 MEETING# 23, [Online] 8 - 11 January 2002, pages 1-5, XP002228486 Espoo, Finland Retrieved from the Internet: <URL:http://www.3gpp.org/ftp/tsg_ran/WG1_R L1/TSGR1_23/Docs/Zips/> [retrieved on 2003-01-22] * the whole document * --- | 1,2,4, 7-11 | H04Q7/38 |
| A | WO 01 47305 A (ERICSSON INC) 28 June 2001 (2001-06-28) * page 6, line 8 - line 26 * --- | 3,5,6 | |
| A | WO 01 52570 A (NOKIA NETWORKS OY ;TARVAINEN TOMI (FI)) 19 July 2001 (2001-07-19) ----- | | TECHNICAL FIELDS SEARCHED (Int.Cl.7) H04Q |

The present search report has been drawn up for all claims

| Place of search | Date of completion of the search | Examiner |
|---|---|---|
| THE HAGUE | 23 January 2003 | Schut, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 02 01 8355

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2003

| Patent document cited in search report | | Publication date | Patent family member(s) | | Publication date |
|---|---|---|---|---|---|
| WO 0147305 | A | 28-06-2001 | US | 6442395 B1 | 27-08-2002 |
| | | | AU | 1793201 A | 03-07-2001 |
| | | | WO | 0147305 A1 | 28-06-2001 |
| WO 0152570 | A | 19-07-2001 | FI | 20000047 A | 12-07-2001 |
| | | | AU | 2684101 A | 24-07-2001 |
| | | | EP | 1247415 A2 | 09-10-2002 |
| | | | WO | 0152570 A2 | 19-07-2001 |

EPO FORM P0459

For more details about this annex : see Official Journal of the European Patent Office, No. 12/82